# EUROPEAN PATENT SPECIFICATION

(11) **EP 2 796 981 B1**
(45) Date of publication and mention of the grant of the patent: **19.06.2019**
(21) Application number: 13179561.9
(22) Date of filing: 07.08.2013
(51) Int. Cl.: G06F 3/0488, G06F 3/0481

(54) **Apparatus and method for controlling a touchscreen display for one hand operation**
Vorrichtung und Verfahren zur Ansteuerung eines Berührungsbildschirms für einhändige Bedienung
Appareil et procédé pour commander un dispositif d'affichage à écran tactile pour un fonctionnement d'une main

(30) Priority: 27.04.2013 CN 201310153827; 29.05.2013 WO PCT/CN2013/076421
(43) Date of publication of application: 29.10.2014
(73) Proprietor: Spreadtrum Communications (Shanghai) Co., Ltd., Shanghai 201203 (CN)
(72) Inventor: Xia, Lu, 201203 Shanghai (CN); Yin, Linna, 201203 Shanghai (CN)
(74) Representative: Hanna Moore + Curley

(56) References cited:
- WO-A1-2012/019350
- JP-A- 2012 199 888
- US-A1- 2007 236 460
- US-A1- 2010 134 423

## Description

### Field of the Disclosure

This disclosure relates to human-computer interfaces in general and more particularly, to apparatus and method for controlling a touchscreen display for operation by one hand.

### Background of the Disclosure

Electronic devices, such as portable electronic devices, have gained worldwide popularity due to their broad applications. Portable electronic devices may include, for example, smartphones, wireless personal digital assistants (PDAs), tablets, laptop computers with wireless or Bluetooth® capabilities, cellular telephones, etc. A user may use, for example, a smartphone to perform a variety of functions including making telephone calls, sending electronic messages, taking photos, reading articles, and other functions, by installing applications.

With the increasing number of applications, users tend to install more and more applications on their portable electronic devices. At the same time, users have started reading articles on their portable electronic devices. To accommodate users' various usages, manufacturers have brought into the market portable electronic devices that have relatively large touchscreens to enable rendering of more icons and contents. This, however, gives rise to problems for users who use one hand to operate portable electronic devices. For example, if a user uses the left hand to operate a portable electronic device and touches the touchscreen with the left thumb, the left thumb may not reach icons that are located far from the thumb location on the touchscreen.

To solve this problem, existing technologies relating to Human-Computer Interaction may provide a settings menu, by which a user sets his/her hand use preference. For example, if a user prefers to use the left hand while operating a portable electronic device, the user can set a corresponding user preference on the settings menu. After setting the user preference, icons on the user's portable electronic device touchscreen are displayed on the left hand side, such that the left thumb of the user can reach all the icons displayed on the touchscreen of the portable electronic device.

However, the existing technologies are not only complicated but also require presetting. Situations may arise in which a user has a need to use the right hand, even though the user usually uses the left hand to operate the user's portable electronic device. As an example, with the left hand being occupied, the user may need to instead use the right hand to operate the portable electronic device (e.g., to use an application on the portable device). Due to this need, the user may not have time to preset a user preference regarding which hand to use. As a result, a user may drop a portable electronic device while trying to reach an icon displayed on the touchscreen according to the preset preference and located far away from, e.g., the right thumb, while the left hand (corresponding to the preset) is occupied.

### SUMMARY OF THE DISCLOSURE

The present invention provides a solution for controlling a touchscreen display for operation by one hand according to the independent claims. Preferred embodiments are provided by the dependent claims. The examples of the following description which are not covered by the claims, are provided for illustrative purpose only and are only intended to assist the reader in understanding the present invention. However, such examples which are not covered by the claims do not form part of the present invention that is solely defined by the claims.

It is to be understood that the following detailed description is exemplary and explanatory only and is not restrictive of the invention as claimed.

US2007236460 A1 discloses a method and apparatus for user interface adaptation. The method determines a handedness of a user who is operating the handheld device, and changes physical aspects of at least one touch target of a user touch interface of the handheld device to adapt to the handedness of the user when the handedness of the user is different than a current handedness of user touch interface of the handheld device.

WO2012019350 A1 discloses a computer-implemented method that includes receiving, at a mobile computing device, a first input that indicates a user touching a touchscreen display of the mobile computing device with a pointer, and determining a position of the mobile computing device with respect to the user based on information other than information from the user's touch of the touchscreen display. The method also includes identifying the pointer as a particular finger or type of finger of the user based upon, at least, the determined position of the mobile computing device with respect to the user, and interpreting the received first input on the touchscreen display of the mobile computing device using the identified finger or type of finger.

JP2012199888 A discloses a portable terminal comprising a panel contact detection part including a first contact detection line and a second contact detection line arranged in an arc shape; and a body part contact detection part including a third contact detection line and a fourth contact detection line arranged on a side part of a body part. The detection parts are designed with a handling manner such that a user holds the body part of the portable terminal with one hand and touches an icon by a thumb. The panel contact detection part detects a motion of the thumb when the portable terminal is handled and the body contact detection part detects a contact condition of a palm with the body part when the portable terminal is handled with the thumb.

US2010134423 discloses systems and methodologies for adapting input/output operation of an electronic device for left-handed and/or right-handed scenarios. It describes using sensors (e.g., capacitive, resistive, touch-sensitive, etc.) which are applied to respective outer edges of a device to determine whether a device is in a user's left hand and/or right hand. Based on this determination, respective points along the sensors can be mapped to soft keys to automatically optimize input for left-handed and/or right-handed operation. As further described herein, points of contact with an input device such as a touch-screen can be corrected based on whether a user's left hand and/or right hand is holding an associated electronic device. For example, upon identifying contact between a touch-screen and a thumb of a hand being used to hold an associated device, the point of contact can be shifted to compensate for the angle of the thumb with respect to the touch-screen.

### BRIEF DESCRIPTION OF THE DRAWINGS

The accompanying drawings, which are incorporated in and constitute a part of this specification, illustrate embodiments and, together with the description, serve to explain principles of the invention.
Fig. 1 illustrates a block diagram of an apparatus for controlling a display on a touchscreen for operation by one hand of a user, according to an exemplary embodiment.
Fig. 2 illustrates a dividing line in the middle of a touchscreen, according to an exemplary embodiment.
Figs. 3A and 3B illustrate methods for setting one hand to operate a touchscreen, according to an exemplary embodiment.
Figs. 4A and 4B show icons displayed on a touchscreen based on a result of determining which hand of a user is being used when operating the touchscreen, according to an example.
Figs. 5A and 5B show icons displayed on a touchscreen according to a preset preference, according to an example.
Fig. 6 illustrates a flow chart of a process for controlling a display on a touchscreen for operation by one hand of a user, according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of systems and methods consistent with aspects related to the invention as recited in the appended claims.

Exemplary embodiments may take the form of hardware embodiments, or embodiments combining both hardware and software. For example, an apparatus may be configured to contain one or more circuits for performing a function of controlling a display on a touchscreen for operation by one hand of a user. As another example, an apparatus may be configured to perform a function of controlling a display on a touchscreen for operation by one hand of a user by implementing a software application.

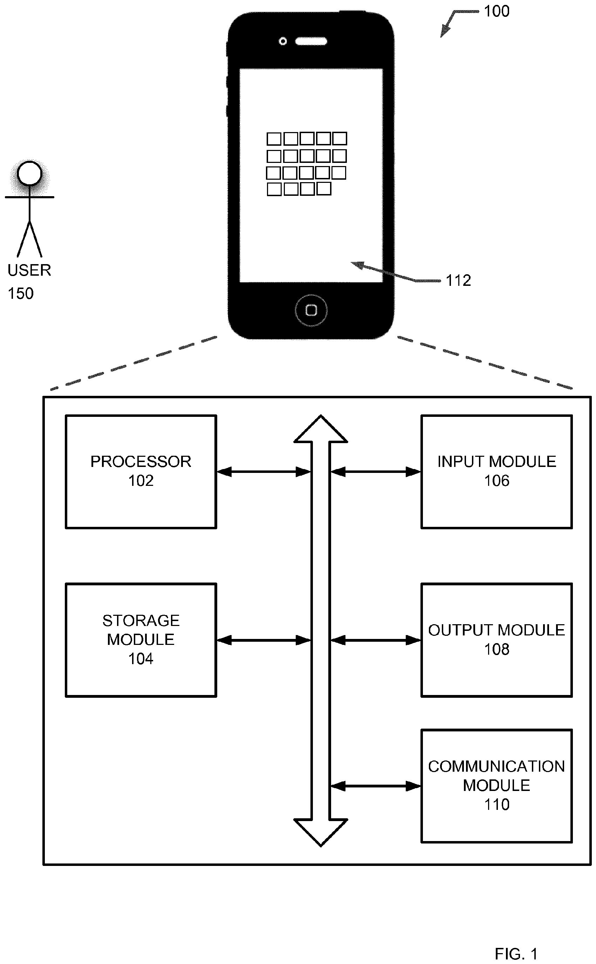

Fig. 1 illustrates a block diagram of an apparatus 100 for controlling a display on a touchscreen 112 for operation by one hand of a user 150, according to an exemplary embodiment. Apparatus 100 may be a computing device configured to control a display on touchscreen 112. Apparatus 100 may represent a portal device including, for example, mobile telephones, smartphones, personal digital assistants (PDAs) having wireless communication capability, video game controllers, tablet personal computers (PCs), notebook computers, laptop computers, or any additional or alternative mobile device known in the art configured to include a touchscreen for input and output. Fig. 1 also shows user 150 to operate apparatus 100.

Apparatus 100 includes one or more processors, such as, for example, processor 102, also known as a central processing unit (CPU). Apparatus 100 also includes a storage module 104, an input module 106, an output module 108, and a communication module 110. Processor 102 may be one or more known processing devices, such as a microprocessor from the Pentium™ family manufactured by Intel™ or the Turion™ family manufactured by AMD™. Processor 102 may include a single core or multiple core processor system that provides the ability to perform parallel processing. For example, processor 102 may be a single core processor that is configured with virtual processing technologies known to those skilled in the art. In certain embodiments, processor 102 may use logical processors to simultaneously execute and control multiple processes. Processor 102 may implement virtual machine technologies, or other similar known technologies, to provide the ability to execute, control, run, manipulate, store, etc., multiple software processes, applications, programs, etc. In another embodiment, processor 102 includes a multiple-core processor arrangement (e.g., dual or quad core) that is configured to provide parallel processing functionalities to allow apparatus 100 to execute multiple processes simultaneously. One of ordinary skill in the art would understand that other types of processor arrangements could be implemented that provide for the capabilities disclosed herein.

Storage module 104 includes one or more storage devices configured to store information used by processor 102 (or another component) to perform certain functions according to exemplary embodiments. The one or more storage devices may include, for example, a hard drive, a flash drive, an optical drive, a random-access memory (RAM), a read-only memory (ROM), or any other computer-readable medium known in the art. Storage module 104 can store instructions to enable processor 102 to execute one or more applications, network communication processes, and any other type of application or software known to be available on computing devices. Additionally or alternatively, instructions, application programs, etc., may be stored in an external storage or available from a memory over a network. The one or more storage devices of storage module 104 may be volatile or non-volatile, magnetic, semiconductor, optical, removable, non-removable, or other type of storage device or tangible computer-readable medium.

Input module 106 includes one or more input devices and/or mechanisms to receive input from user 150. For example, input module 106 may include a keyboard, a keypad, a mouse, a joystick, a stylus, a button, a thumbwheel, a touchscreen, or any other input device configured to receive input from user 150. In exemplary embodiments, input module 106 may include touchscreen 112, which is configured to detect touch gestures of user 150 and convert the touch gestures to electronic signals for controlling the display on touchscreen 112.

Output module 108 includes a display device, a speaker, a vibration generator, or any other output device known in the art. In exemplary embodiments, output module 108 is configured to provide feedback to user 150. For example, output module 108 is configured to receive signals from processor 102 and generate a graphical user interface screen including a plurality of graphical elements. These graphical elements may include, for example, icons associated with applications installed on apparatus 100 and stored in storage module 104, menus, buttons, sliding bars, interface controls, etc. In exemplary embodiments, touchscreen 112 is configured to function as output module 108, on which the plurality of graphical elements are displayed.

Communication module 110 is configured to communicate with a telephone network, a wireless cellular network, or a computer network as known in the art. For example, communication module 110 may include a modem configured to provide network communication with a telephone network or a wireless cellular network. Alternatively, communication module 110 may include an Ethernet interface, a Wi-Fi interface, or a Bluetooth® interface to provide network communication with an Ethernet, a local area network (LAN), a wide area network (WAN), or any other computer networks.

In exemplary embodiments, user 150 operates apparatus 100 through touchscreen 112 using, for example, hands or fingers. User 150 touches touchscreen 112 with one or more fingers while operating apparatus 100. The one or more fingers of user 150 generate at least one point of contact on touchscreen 112. Processor 102 is configured to detect the coordinates of the point(s) of contact generated by the one or more fingers of user 150 according to the electronic signals generated by touchscreen 112. In further exemplary embodiments, if user 150 uses four fingers, processor 102 can be configured to determine whether user 150 is using the left hand or the right hand, based on respective coordinates of the points of contact generated by the four fingers on touchscreen 112.

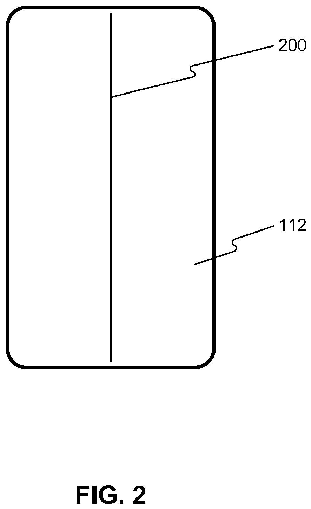

In exemplary embodiments, processor 102 is configured to determine an invisible dividing line on touchscreen 112 ("dividing line"). According to the illustrated embodiments, processor 102 can be configured to determine a dividing line 200 in the middle of touchscreen 112 based on coordinate information, as shown in Fig. 2.

In one exemplary embodiment, processor 102 is configured to use dividing line 200 to determine whether user 150 is using the left hand or the right hand while operating apparatus 100. For example, if user 150 uses four fingers to touch touchscreen 112, four points of contact are generated on touchscreen 112. In other examples, the total number of the points of contact generated by the fingers of user 150 can be greater or fewer than four, such that a different number of points of contact can be used to be the total number of the points of contact for determining whether user 150 is using the left hand or the right hand.

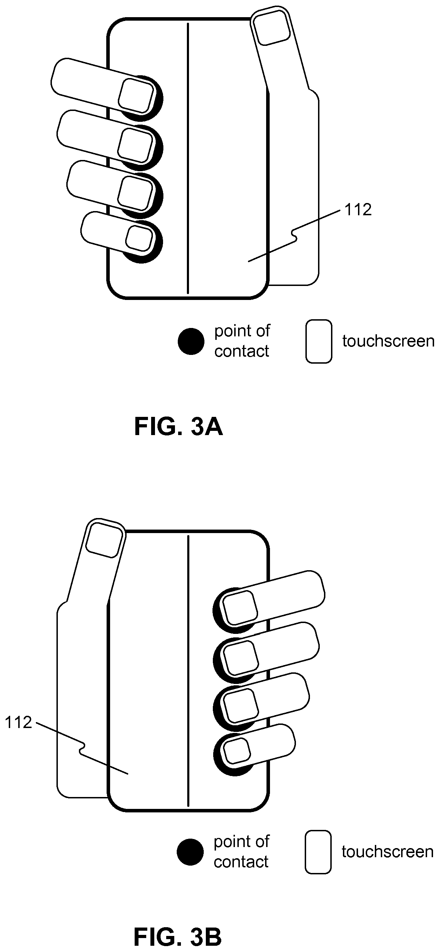

In one exemplary embodiment, as shown in Fig. 3A, if the respective coordinates of the four points of contact all fall to the left side of dividing line 200, processor 102 can be configured to determine that user 150 is using the right hand. As shown in Fig. 3B, if the respective coordinates of the four points of contact all fall to the right side of dividing line 200, processor 102 can be configured to determine that user 150 is using the left hand.

If processor 102 determines that user 150 is using the left hand, processor 102 determines that user 150 intends to use the left hand to operate touchscreen 112. Accordingly, in such a case, processor 102 is configured to cause touchscreen 112 to display an interface screen notifying user 150 that touchscreen 112 is set in a left-hand-operation mode. Similarly, if processor 102 determines that user 150 is using the right hand, processor 102 determines that user 150 intends to use the right hand to operate touchscreen 112. Accordingly, in such a case, processor 102 is configured to cause touchscreen 112 to display an interface screen notifying user 150 that touchscreen 112 is set in a right-hand-operation mode.

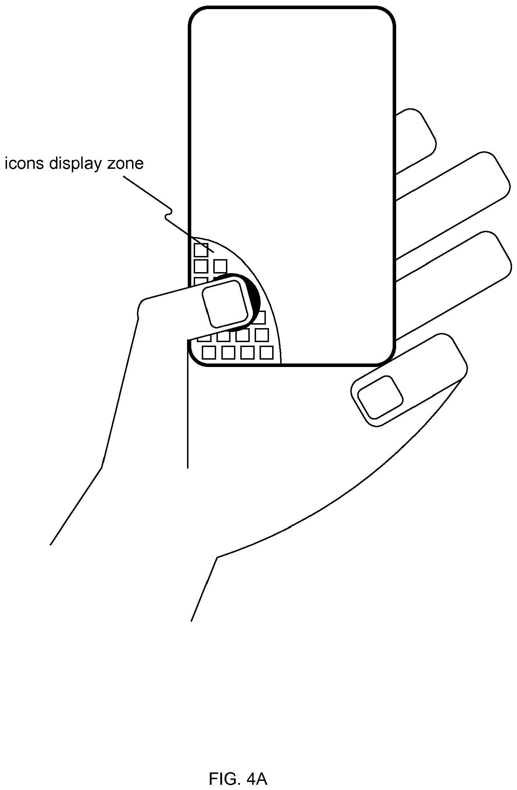

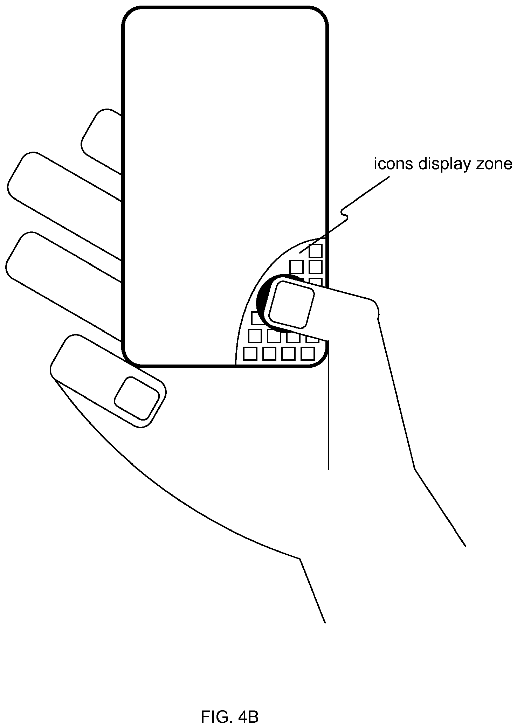

Thus, processor 102 is configured to control the display of touchscreen 112 based on which hand of user 150 is being used to operate touchscreen 112. According to the illustrated examples, touchscreen 112 displays graphic elements including, for example, icons. Figs. 4A and 4B show icons displayed on touchscreen 112 based on a result of determining which hand of user 150 is being used to operate touchscreen 112. In one example, if user 150 is using the left hand, processor 102 is configured to control touchscreen 112 to display the icons in the bottom corner area on the left side of touchscreen 112 (Fig. 4A). In another example, if user 150 is using the right hand, processor 102 is configured to control touchscreen 112 to display the icons in the bottom corner area on the right side of touchscreen 112 (Fig. 4B). The area for displaying the icons on touchscreen 112, such as the bottom corner area on the left or the right side of touchscreen 112, is hereinafter referred to as the "icons display zone."

In exemplary embodiments, the size of the icons display zone is set within the range of the left thumb or the right thumb of user 150, such that the thumb of user 150 can reach all the icons displayed in the icons display zone. In one exemplary embodiment, processor 102 is configured to provide mechanisms that enable user 150 to set the size of the icons display zone. For example, user 150 can preset the size of the icons display zone on a settings menu. When processor 102 determines which hand user 150 is using, the icons display zone is adjusted according to the size user 150 has preset.

In exemplary embodiments, the shape of the icons display zone can be preset by user 150. For example, user 150 can preset the shape of the icons display zone to be fan-shaped. As another example, the shape of the icons display zone can be preset as square, circular, or another shape that enables the left or the right thumb of user 150 to reach all the icons displayed therein. According to the illustrated embodiments, processor 102 is configured to preset a fan-shaped icons display zone as a default icons display zone. For example, as illustrated above, if processor 102 determines that user 150 is using the left hand or the right hand, the fan-shaped icons display zone is located at the bottom corner of the left side or the right side of touchscreen 112, respectively.

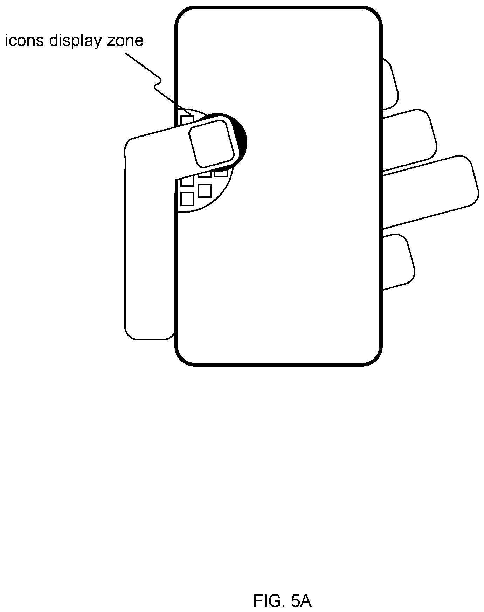

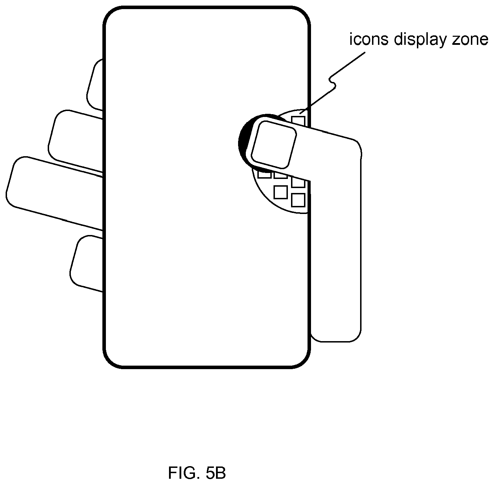

In some examples, processor 102 provides mechanisms that enable user 150 to preset the location of the icons display zone on touchscreen 112. In one example, if user 150 is using the left hand, as shown in Fig. 5A, user 150 can preset the icons display zone along the middle of the left side of touchscreen 112. This preset can be made if, for example, user 150 prefers to place the left thumb in the middle of apparatus 100, and placing the icons display zone along the middle of the left side of touchscreen 112 facilitates user 150 reaching all the icons. In another example, if user 150 is using the right hand, as shown in Fig. 5B, user 150 can preset the icons display zone along the middle of the right side of touchscreen 112.

In a further exemplary embodiment, if user 150 presets the location of the icons display zone, the shape of the icons display zone can be adjusted accordingly. For example, when the icons display zone is located at the bottom left or right corner of touchscreen 112, processor 102 can cause touchscreen 112 to display the icons display zone as fan-shaped. However, when the icons display zone is located along the middle of the left or right side of touchscreen 112, processor 102 can cause touchscreen 112 to display the icons display zone as approximately semicircular.

Additionally or alternatively, processor 102 can determine which hand user 150 intends to use by detecting whether user 150 presses a button. In one exemplary embodiment, apparatus 100 is configured to include a left button and a right button on both the left and the right side. If user 150 intends to use the left hand, user 150 presses the left button. Similarly, if user 150 intends to use the right hand, user 150 presses the right button. Functions regarding displaying the icons, and presetting the size, the location, and/or the shape of the icons display zones are the same as or similar to those exemplary embodiments provided above, so that further detailed description is omitted.

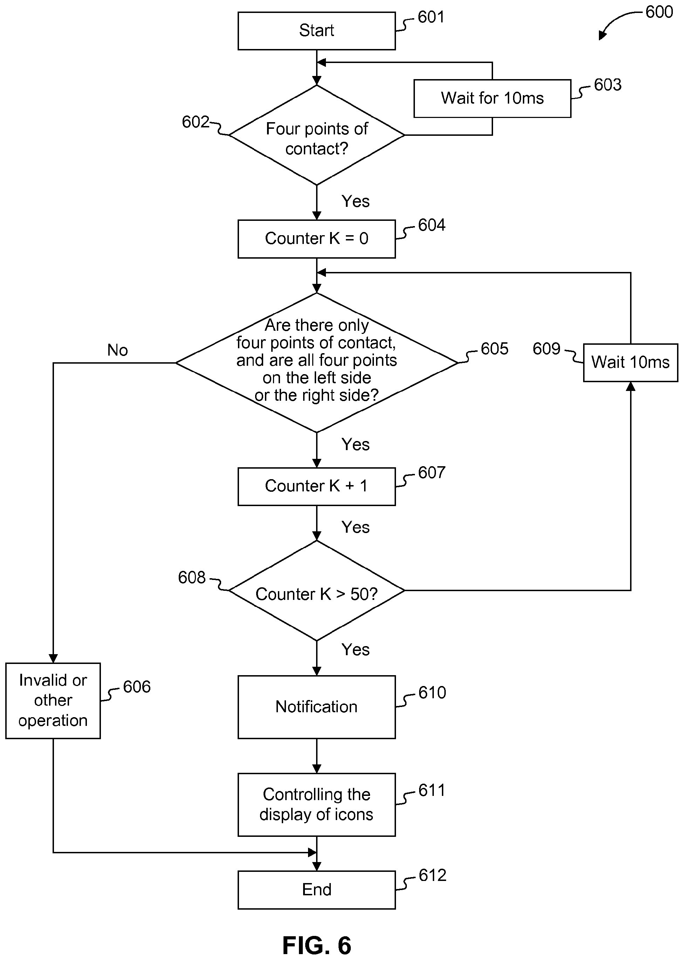

Fig. 6 illustrates a flow chart of a process 600 for controlling a display on touchscreen 112 for operation by one hand of user 150, according to an exemplary embodiment. Process 600 is performed by processor 102 according to computer-executable instructions stored in storage module 104. In one exemplary embodiment, user 150 starts process 600 by touching touchscreen 112. In the illustrated embodiments, user 150 uses one or more fingers to touch touchscreen 112, and processor 102 is configured to detect that user 150 is touching touchscreen 112 (step 601).

In the illustrated embodiments, if user 150 touches touchscreen 112 with one or more fingers, at least one point of contact is generated on touchscreen 112. Processor 102 is configured to determine the number of points of contact generated by the one or more fingers of user 150. In one exemplary embodiment, user 150 may use four fingers to operate touchscreen 112. In this exemplary embodiment, processor 102 can be configured to determine whether there are four points of contact on touchscreen 112 generated by the four fingers of user 150 (step 602).

To filter noise (e.g., accidental touching or touching not by user 150), processor 102 is configured to wait for a predetermined period of time before confirming that there are four points of contact on touchscreen 112 generated by user 150. For example, processor 102 waits for 10ms before confirming whether there are four points of contact generated on touchscreen 112 (step 603).

If processor 102 confirms that there are four points of contact on touchscreen 112, processor 102 initiates a counter K at a value of 0 (step 604).

Processor 102 is configured to check the total number of the points of contact and their coordinates to determine whether user 150 intends to use the left hand or the right hand to operate touchscreen 112. For example, in the present embodiment, the predetermined total number of the points of contact is four, but another number can be the total number of the points of contact for determining whether user 150 intends to use the left hand or the right hand. If the total number of the points of contact is predetermined to be four, processor 102 can be configured to determine whether there are only four points of contact. In such a case, processor 102 can also be configured to detect the coordinates of the four points of contact to determine whether user 150 intends to use the left hand or the right hand to operate touchscreen 112 (step 605).

For example, if processor 102 determines there are four points of contact and that the respective coordinates of the four points of contact all fall to the left side of dividing line 200, i.e., on the left side of touchscreen 112, processor 102 determines that user 150 is using the right hand. As another example, if processor 102 determines there are four points of contact and that the respective coordinates of the four points of contact all fall to the right side of dividing line 200, i.e., on the right side of touchscreen 112, processor 102 determines that user 150 is using the left hand.

However, if processor 102 determines that there are greater or fewer than a predetermined total number of points of contact detected on touchscreen 112, and/or the distribution of the points of contact is not consistent with a predetermined distribution, processor 102 determines that an invalid operation or other operation has occurred (step 606). For example, if the predetermined total number of points of contact is four, and processor 102 determines that there are greater or fewer than four points of contact detected on touchscreen 112, processor 102 determines that an invalid operation or other operation has occurred. As another example, while processor 102 determines that there are only four points of contact on touchscreen 112, if the respective coordinates of the four points of contact do not all fall on the left or the right side of touchscreen 112, processor 102 also determines that an invalid operation or other operation has occurred. In such case, the process flows to step 612.

If the predetermined total number of the points of contact for determining whether user 150 is using the left hand or the right hand is four, while processor 102 is determining whether there are only four points of contact on touchscreen 112, and the respective coordinates of the four points of contact all fall on one side of touchscreen 112, the counter K is incremented by 1ms (step 607). Processor 102 is configured then to determine whether the counter K has incremented to a predetermined period of time, such as, for example, 50ms (step 608). If counter K has incremented to a number exceeding 50ms, processor 102 is configured to wait for a predetermined period of time, such as, for example, 10ms, before confirming that there are only four points of contact, and that the respective coordinates of the four points of contact all fall on one side of touchscreen 112 (step 609).

According to the illustrated embodiments, if processor 102 confirms that there are only four points of contact, and the respective coordinates of the four points of contact all fall on one side of touchscreen 112, processor 102 is configured to cause touchscreen 112 to generate an interface screen notifying user 150 that touchscreen 112 has been set in either a left-hand-operation mode, or a right-hand-operation mode, depending on which hand user 150 is using when operating touchscreen 112 (step 610).

Processor 102 is configured to control the display of icons on touchscreen 112 based on which hand user 150 is using (step 611). For example, if user 150 is using the left hand to hold apparatus 100 and touch touchscreen 112, processor 102 can be configured to determine that user 150 intends to use the left hand to operate touchscreen 112, and accordingly cause touchscreen 112 to display icons on the left side of touchscreen 112. On the other hand, if user 150 is using the right hand to hold apparatus 100 and touch touchscreen 112, processor 102 can be configured to determine that user 150 intends to use the right hand to operate touchscreen 112, and accordingly cause touchscreen 112 to display icons on the right side of touchscreen 112. A detailed description regarding how the icons are displayed on touchscreen 112 has been provided above, and is therefore omitted.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for controlling a touchscreen display for operation by one hand, comprising:
receiving, via the touchscreen (112), at least one point of contact on the touchscreen (112) generated by one or more fingers of a user (150), the touchscreen (112) including a plurality of icons;
detecting, by at least one processing device (102), a total number of the points of contact on the touchscreen (112) and respective coordinates of the points of contact;
determining, based on the total number of the points of contact and the respective coordinates of the points of contact, which hand the user (150) is using to operate the touchscreen (112); and
controlling the touchscreen (112) to display the plurality of icons based on a result of the determining,
**characterized in that** the method further comprises determining a dividing line (200) in the middle of the touchscreen (112); and
wherein determining which hand the user (150) is using further comprises:
determining the user (150) is using the left hand if:
the total number of the points of contact is four; and
the respective coordinates of the four points of contact all fall to the right
side of the dividing line (200);
or
determining the user (150) is using the right hand if:
the total number of the points of contact is four; and
the respective coordinates of the four points of contact all fall to the left side of the dividing line (200).

2. The method of claim 1, further comprising providing a menu for the user (150) to set a preference for at least one feature of a zone on the touchscreen (112) for displaying the plurality of icons.

3. The method of claim 2, further comprising providing the zone with a plurality of features including size, shape, and location.

4. The method of claim 3, further comprising providing the shape of the zone as a predetermined fan-shape.

5. An apparatus for controlling a touchscreen display for operation by one hand, comprising:
a storage module (104) configured to store computer executable instructions; and
a processor (102), executing the computer executable instruction, configured to:
receive, via the touchscreen (112), at least one point of contact on the touchscreen (112) generated by one or more fingers of a user (150), the touchscreen (112) including a plurality of icons;
detect a total number of the points of contact on the touchscreen (112) and respective coordinates of the points of contact;
determine, based on the total number of the points of contact and the respective coordinates of the points of contact, which hand the user (150) is using to operate the touchscreen (112); and
control the touchscreen (112) to display the plurality of icons based on a result of determining,
**characterized in that** the processor (102) is further configured to:
determine a dividing line (200) in the middle of the touchscreen (112);
determine the user (150) is using the left hand if:
the total number of the points of contact is four; and
the respective coordinates of the four points of contact all fall to the right side of the dividing line (200);
determine the user (150) is using the right hand if:
the total number of the points of contact is four; and
the respective coordinates of the four points of contact all fall to the left side of the dividing line (200).

6. The apparatus of claim 5, wherein the processor (102) is further configured to provide a menu for the user (150) to set a preference for at least one feature of a zone on the touchscreen (112) for displaying the plurality of icons.

7. The apparatus of claim 6, wherein the processor (102) is further configured to provide the zone with a plurality of features including size, shape, and location.

8. The apparatus of claim 7, wherein the shape of the zone is predetermined as fan-shaped.

9. A computer-readable medium including instructions, which, when executed by at least one processor (102), causes the processor (102) to perform a method according to any one of claims 1 to 4.

## Patentansprüche

1. Verfahren zum Steuern einer Berührungsbildschirmanzeige zur Bedienung durch eine Hand, umfassend:
Empfangen, über den Berührungsbildschirm (112), mindestens eines Kontaktpunkts auf dem Berührungsbildschirm (112), der durch einen oder mehrere Finger eines Benutzers (150) erzeugt wurde, wobei der Berührungsbildschirm (112) eine Vielzahl von Symbolen enthält;
Erkennen, durch mindestens eine Verarbeitungsvorrichtung (102), einer Gesamtanzahl der Kontaktpunkte auf dem Berührungsbildschirm (112) und jeweiliger Koordinaten der Kontaktpunkte;
Ermitteln, auf Grundlage der Gesamtanzahl der Kontaktpunkte und der jeweiligen Koordinaten der Kontaktpunkte, welche Hand der Benutzer (150) verwendet, um den Berührungsbildschirm (112) zu bedienen; und
Steuern des Berührungsbildschirms (112), um die Vielzahl von Symbolen auf Grundlage eines Ergebnisses der Ermittlung anzuzeigen,
**dadurch gekennzeichnet, dass** das Verfahren ferner ein Ermitteln einer Trennlinie (200) in der Mitte des Berührungsbildschirms (112) umfasst; und
wobei das Ermitteln, welche Hand der Benutzer (150) verwendet, ferner umfasst:
Ermitteln, dass der Benutzer (150) die linke Hand verwendet, falls:
die Gesamtanzahl der Kontaktpunkte vier ist; und
die jeweiligen Koordinaten der vier Kontaktpunkte alle auf die rechte Seite der Trennlinie (200) fallen;
oder
Ermitteln, dass der Benutzer (150) die rechte Hand verwendet, falls:
die Gesamtanzahl der Kontaktpunkte vier ist; und
die jeweiligen Koordinaten der vier Kontaktpunkte alle auf die linke Seite der Trennlinie (200) fallen.

2. Verfahren nach Anspruch 1, ferner umfassend ein Bereitstellen eines Menüs für den Benutzer (150) zum Festlegen einer Präferenz für mindestens ein Merkmal einer Zone auf dem Berührungsbildschirm (112) zum Anzeigen der Vielzahl der Symbole.

3. Verfahren nach Anspruch 2, das ferner ein Bereitstellen der Zone mit einer Vielzahl von Merkmalen einschließlich Größe, Form und Position umfasst.

4. Verfahren nach Anspruch 3, das ferner ein Bereitstellen der Form der Zone als eine vorbestimmte Fächerform umfasst.

5. Vorrichtung zum Steuern einer Berührungsbildschirmanzeige zur Bedienung durch eine Hand, umfassend:
ein Speichermodul (104), das ausgelegt ist, computerausführbare Anweisungen zu speichern; und
einen Prozessor (102), der die computerausführbare Anweisung ausführt und ausgelegt ist:
über den Berührungsbildschirm (112) mindestens einen Kontaktpunkt auf dem Berührungsbildschirm (112) zu empfangen, der durch einen oder mehrere Finger eines Benutzers (150) erzeugt wurde, wobei der Berührungsbildschirm (112) eine Vielzahl von Symbolen enthält;
eine Gesamtanzahl der Kontaktpunkte auf dem Berührungsbildschirm (112) und jeweilige Koordinaten der Kontaktpunkte zu erkennen;
auf Grundlage der Gesamtanzahl der Kontaktpunkte und der jeweiligen Koordinaten der Kontaktpunkte zu ermitteln, welche Hand der Benutzer (150) verwendet, um den Berührungsbildschirm (112) zu bedienen; und
den Berührungsbildschirm (112) zu steuern, um die Vielzahl von Symbolen auf Grundlage eines Ergebnisses der Ermittlung anzuzeigen,
**dadurch gekennzeichnet, dass** der Prozessor (102) ferner ausgelegt ist:
eine Trennlinie (200) in der Mitte des Berührungsbildschirms (112) zu ermitteln;
zu ermitteln, dass der Benutzer (150) die linke Hand verwendet, falls:
die Gesamtanzahl der Kontaktpunkte vier ist; und
die jeweiligen Koordinaten der vier Kontaktpunkte alle auf die rechte Seite der Trennlinie (200) fallen;
zu ermitteln, dass der Benutzer (150) die rechte Hand verwendet, falls:
die Gesamtanzahl der Kontaktpunkte vier ist; und
die jeweiligen Koordinaten der vier Kontaktpunkte alle auf die linke Seite der Trennlinie (200) fallen.

6. Vorrichtung nach Anspruch 5, wobei der Prozessor (102) ferner ausgelegt ist, ein Menü für den Benutzer (150) zum Festlegen einer Präferenz für mindestens ein Merkmal einer Zone auf dem Berührungsbildschirm (112) zum Anzeigen der Vielzahl der Symbole bereitzustellen.

7. Vorrichtung nach Anspruch 6, wobei der Prozessor (102) ferner ausgelegt ist, die Zone mit einer Vielzahl von Merkmalen einschließlich Größe, Form und Position bereitzustellen.

8. Vorrichtung nach Anspruch 7, wobei die Form der Zone als eine Fächerform vorbestimmt ist.

9. Computerlesbares Medium, das Anweisungen enthält, die bei Ausführung durch einen Prozessor (102) den Prozessor (102) veranlassen, ein Verfahren nach einem der Ansprüche 1 bis 4 auszuführen.

## Revendications

1. Procédé de commande d'un dispositif d'affichage à écran tactile pour un pilotage à une main, comprenant :
recevoir, par l'intermédiaire de l'écran tactile (112), au moins un point de contact sur l'écran tactile (112) généré par un ou plusieurs doigts d'un utilisateur (150), l'écran tactile (112) comprenant une pluralité d'icônes ;
détecter, par au moins un dispositif de traitement (102), un nombre total des points de contact sur l'écran tactile (112) et des coordonnées respectives des points de contact ;
déterminer, sur la base du nombre total des points de contact et des coordonnées respectives des points de contact, quelle main l'utilisateur (150) utilise pour piloter l'écran tactile (112) ; et
commander l'écran tactile (112) pour afficher la pluralité d'icônes sur la base d'un résultat de la détermination,
**caractérisé par le fait que** le procédé comprend en outre la détermination d'une ligne de division (200) au milieu de l'écran tactile (112) ; et
dans lequel la détermination de quelle main l'utilisateur (150) utilise comprend en outre :
déterminer que l'utilisateur (150) utilise la main gauche si :
le nombre total des points de contact est de quatre ; et
les coordonnées respectives des quatre points de contact tombent toutes sur le côté droit de la ligne de division (200) ;
ou
déterminer que l'utilisateur (150) utilise la main droite si :
le nombre total des points de contact est de quatre ; et
les coordonnées respectives des quatre points de contact tombent toutes sur le côté gauche de la ligne de division (200).

2. Procédé selon la revendication 1, comprenant en outre la fourniture d'un menu pour l'utilisateur (150) pour régler une préférence pour au moins une caractéristique d'une zone sur l'écran tactile (112) pour afficher la pluralité d'icônes.

3. Procédé selon la revendication 2, comprenant en outre la fourniture de la zone avec une pluralité de caractéristiques comprenant la taille, la forme et l'emplacement.

4. Procédé selon la revendication 3, comprenant en outre la fourniture de la forme de la zone en forme d'éventail prédéterminée.

5. Appareil de commande d'un dispositif d'affichage à écran tactile pour un pilotage à une main, comprenant :
un module de stockage (104) configuré pour stocker des instructions aptes à être exécutées par ordinateur ; et
un processeur (102), exécutant l'instruction apte à être exécutée par ordinateur, configuré pour :
recevoir, par l'intermédiaire de l'écran tactile (112), au moins un point de contact sur l'écran tactile (112) généré par un ou plusieurs doigts d'un utilisateur (150), l'écran tactile (112) comprenant une pluralité d'icônes ;
détecter un nombre total des points de contact sur l'écran tactile (112) et des coordonnées respectives des points de contact ;
déterminer, sur la base du nombre total des points de contact et des coordonnées respectives des points de contact, quelle main l'utilisateur (150) utilise pour piloter l'écran tactile (112) ; et
commander l'écran tactile (112) pour afficher la pluralité d'icônes sur la base d'un résultat de détermination,
**caractérisé par le fait que** le processeur (102) est en outre configuré pour :
déterminer une ligne de division (200) au milieu de l'écran tactile (112) ;
déterminer que l'utilisateur (150) utilise la main gauche si :
le nombre total des points de contact est de quatre ; et
les coordonnées respectives des quatre points de contact tombent toutes sur le côté droit de la ligne de division (200) ;
déterminer que l'utilisateur (150) utilise la main droite si :
le nombre total des points de contact est de quatre ; et
les coordonnées respectives des quatre points de contact tombent toutes sur le côté gauche de la ligne de division (200).

6. Appareil selon la revendication 5, dans lequel le processeur (102) est en outre configuré pour fournir un menu pour l'utilisateur (150) pour régler une préférence pour au moins une caractéristique d'une zone sur l'écran tactile (112) pour afficher la pluralité d'icônes.

7. Appareil selon la revendication 6, dans lequel le processeur (102) est en outre configuré pour fournir la zone avec une pluralité de caractéristiques comprenant la taille, la forme et l'emplacement.

8. Appareil selon la revendication 7, dans lequel la forme de la zone est prédéterminée en forme d'éventail.

9. Support lisible par ordinateur comprenant des instructions, qui, lorsqu'elles sont exécutées par au moins un processeur (102), amènent le processeur (102) à réaliser un procédé selon l'une quelconque des revendications 1 à 4.
